# FASCICULE DE BREVET EUROPEEN

(11) **EP 0 693 343 B1**
(45) Date de publication et mention de la délivrance du brevet: **30.07.1997**
(21) Numéro de dépôt: 95420196.8
(22) Date de dépôt: 12.07.1995
(51) Int. Cl.: B23K 9/29

(54) **Torche de soudage électrique sous gaz neutre et avec aspiration**
Elektrischer Schutzgasschweissbrenner mit Absaugung
Electric torch for welding under shielding gas and with aspiration

(30) Priorité: 21.07.1994 FR 9409258
(43) Date de publication de la demande: 24.01.1996
(73) Titulaire: Société Française de Torches - "SFT", F-69120 Vaulx en Velin (FR)
(72) Inventeur: Chabry, Jean, F-01640 Jujurieux (FR)
(74) Mandataire: Perrier, Jean-Pierre

(56) Documents cités:
- CH-A- 262 852
- DE-B- 2 823 037
- FR-A- 2 403 152
- FR-A- 2 499 439

## Description

L'invention est relative à une torche de soudage électrique sous gaz neutre et avec aspiration des fumées.

Elle vise plus particulièrement les torches comportant:
- un support tubulaire axial, formant col de cygne dont l'extrémité amont est disposée à l'intérieur d'une lance d'aspiration et dont l'extrémité aval porte un diffuseur de gaz inerte,
- un passe fil de contact, fixé dans le prolongement du diffuseur et une gaine guide fil disposée axialement dans le col de cygne,
- une buse de diffusion de gaz inerte entourant le passe fil et alimentée par le diffuseur,
- et une buse de captage raccordée à la lance d'aspiration.

De telles torches de soudage doivent satisfaire à de nombreux critères:
- être de construction simple, pour faciliter l'interchangeabilité des pièces d'usure, telles que buse pour gaz et bagues en matériau isolant interposées entre le coeur de la torche et sa partie externe, préhensible et portant la buse pour gaz,
- assurer une parfaite concentricité de la buse pour gaz avec le passe fil de contact, pour éviter la formation de court circuit entre ces éléments, et cela malgré les dilatations différentielles et les chocs pouvant affecter la liaison,
- présenter une partie massive, favorisant l'évacuation des calories dégagées par le fonctionnement,
- être peu encombrante, pour ne pas gêner sa manipulation lors des opérations de soudage,
- et assurer l'élimination des fumées avec le meilleur rendement, sans affecter le débit de gaz neutre.

Pour simplifier la construction des torches, du type décrites dans DE-B-2 823 037, le brevet français FR-B-2 499 439, assure l'assemblage du col de cygne, de la buse pour gaz et de la lance d'aspiration, au moyen d'une unique pièce massive formant le corps de la buse de captage des fumées. Dans cette dernière structure, la pièce de jonction est positionnée radialement de manière principale par l'extrémité du col de cygne et par appui sur des demi bagues isolantes amont interposées entre elle et cette extrémité. En raison de ce positionnement sur des demi bagues, et en particulier, des tolérances de montage, la concentricité n'est pas parfaite, ce qui, compte tenu du montage en porte-à-faux de la buse à gaz, peut favoriser l'amorçage de court circuit entre la buse et le passe fil.

Par ailleurs, le remplacement de la bague isolante aval, enveloppant très partiellement le diffuseur, nécessite de démonter ce diffuseur, c'est à dire de procéder à un démontage complet de la torche, avec le risque de déplacer longitudinalement les éléments les uns par rapport aux autres, et ainsi de compliquer le remontage.

La torche selon l'invention a pour but de remédier à ces inconvénients et à satisfaire aux diverses conditions d'usage précitées plus en avant.

A cet effet, dans la torche selon l'invention, la buse à gaz est solidaire d'un porte buse comportant intérieurement deux portées cylindriques de diamètres différents et dont la portée de grand diamètre à une longueur au moins égale à la valeur de son diamètre, ces deux portées s'emmanchant sur deux portées cylindriques étagées et externes du diffuseur, tandis que le calage en translation longitudinal de ce porte buse est assuré, vers l'amont, par appui d'un épaulement interne, ménagé entre ses portées de diamètres différents, contre l'épaulement aval du diffuseur, et, vers l'aval, par appui, contre un épaulement amont du même diffuseur, de la face diamétrale d'une douille filetée, visée à l'extrémité de ce porte buse et faisant corps avec la buse de captage.

Dans cette construction, la concentricité du porte buse et, en conséquence de la buse pour gaz, est assurée par positionnement de ses portées sur celles du diffuseur, ce positionnement s'effectuant sur des portées de grande longueur et dont, au moins l'une, a un diamètre important.

Pour accéder au diffuseur, il suffit de dévisser le porte buse par rapport à la douille filetée, sans avoir à procéder au démontage du diffuseur sur le col de cygne, ce qui facilite le remontage ultérieur.

Dans une forme d'exécution de l'invention, le diffuseur comporte une portée cylindrique qui, centrale et épaulée à chaque extrémité, a un diamètre plus grand que ceux de ses extrémités, recevant le passe fil et se vissant dans le col de cygne, et est coiffé sur toute sa longueur par l'une des jupes d'une bague isolante aval, cette jupe se prolongeant, d'une part et vers l'aval, par un collet venant contre la face diamétrale correspondante du diffuseur et par une autre jupe de plus petit diamètre coiffant la portée aval correspondante de ce diffuseur et, d'autre part et vers l'amont, par une couronne enveloppant une collerette solidaire d'une bague isolante amont, en deux parties, enveloppant l'extrémité du col de cygne.

Il ressort de cette description que la bague isolante aval est monolithique et que, de par cette configuration, elle peut être extraite en totalité par l'aval de la torche, après démontage du porte jupe, ce qui facilite son remplacement.

La réalisation en deux parties de la bague isolante amont est sans conséquence sur la précision du montage, puisqu'elle ne sert qu'à isoler la douille filetée faisant corps avec la buse de captage, et elle-même positionnée par le porte buse.

Avantageusement, un joint d'étanchéité est interposé entre la face diamétrale de la douille filetée de la buse de captage et la face contre laquelle elle s'appuie, tandis que le porte buse et la douille filetée comportent, dans leur liaison filetée, des faces de butée limitant, au montage, la compression de ce joint.

Ce joint a une double fonction. Il s'oppose d'abord à tout échappement vers l'extérieur des gaz inertes pouvant passer à travers la liaison filetée entre le diffuseur et le col de cygne, et, en complément, il forme un amortisseur élastique absorbant, d'une part, les dilatations différentielles longitudinales entre les éléments de la torche, et, d'autre part, les chocs longitudinaux, par exemple, lorsque la buse à gaz heurte axialement un corps extérieur.

D'autres caractéristiques et avantages ressortiront de la description qui suit en référence aux dessins schématiques annexés représentant, à titre d'exemple non limitatif, une forme d'exécution de la torche selon l'invention.
Figures 1 et 2 sont des vues de côté en coupe longitudinale, les éléments essentiels étant respectivement assemblés et démontés,

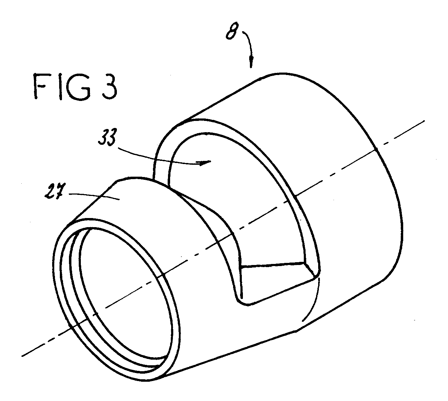

Figure 3 est une vue en perspective de la buse de captage.

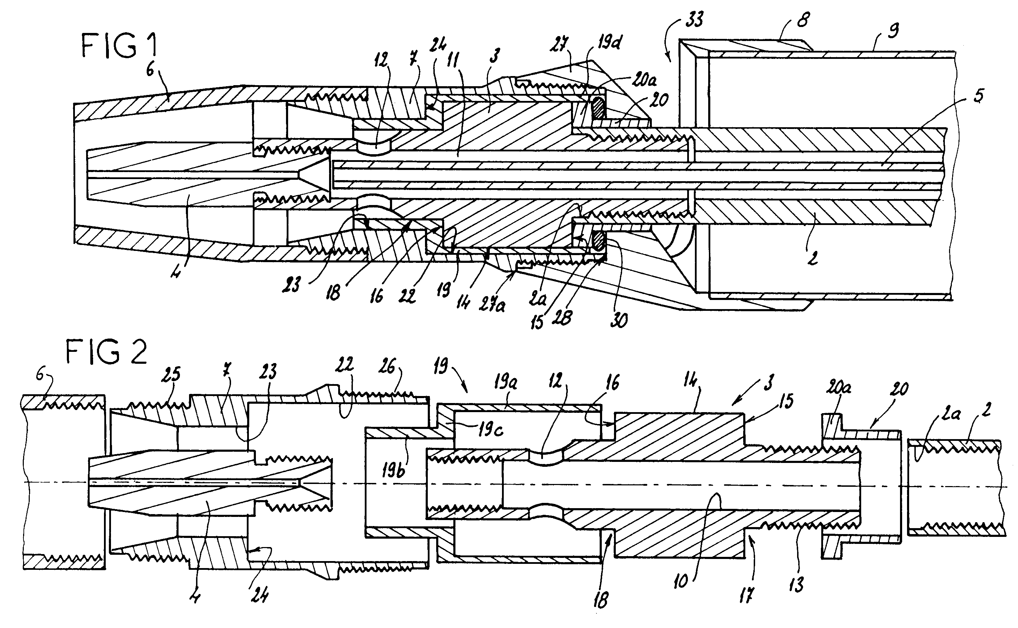

Aux figures 1 et 2, la référence numérique 2 désigne l'extrémité aval du support tubulaire, également dénommé col de cygne, 3 désigne le diffuseur de gaz, 4 le passe fil de contact, et 5 la gaine guide fil, disposée axialement dans le col de cygne et s'étendant jusqu'au passe fil 4. 6 désigne la buse à gaz, solidaire d'un porte buse 7 et enfin 8 désigne, de manière générale, la buse de captage des fumées, solidaire de l'enveloppe 9 d'une lance d'aspiration.

De façon connue, le diffuseur 3 comporte un alésage axial 10 qui délimite, avec la gaine 5, une chambre annulaire 11 permettant l'amenée du gaz inerte et communiquant, par des alésages radiaux 12 avec la partie intérieure de la buse à gaz 6. De même, le passe fil 4, réalisé en métal conducteur, est alimenté en courant électrique par un circuit, non représenté, disposé dans la chambre annulaire 11 aboutissant au col de cygne 2. Enfin, le diffuseur est muni d'un embout amont fileté 13 se vissant dans l'extrémité filetée du col de cygne 2.

Selon l'invention, le diffuseur 3 comporte une portée cylindrique centrale 14 de grand diamètre bordée par deux épaulements, respectivement amont 15 et aval 16, et par deux portées cylindriques de plus petits diamètres, que cette portée 14, respectivement amont 17 et aval 18. On notera que la longueur de la portée centrale 14 est sensiblement égale à la valeur du diamètre de cette portée.

Dans la forme d'exécution représentée, les portées, respectivement centrale 14 et aval 18 du diffuseur, sont coiffées par les deux jupes cylindriques, respectivement 19a et 19b, d'une bague isolante désignée, de façon générale, par 19. Ces deux jupes sont reliées par un collet 19c apte à venir en appui contre l'épaulement aval 16 du diffuseur 3.

La portée amont 17 du diffuseur coopère avec une portée 2a aménagée à l'extrémité du col de cygne 2 pour assurer la concentricité du diffuseur 3 par rapport à l'axe longitudinal de ce col de cygne.

La jupe 19a de la bague isolante aval 19 se prolonge vers l'amont au-delà de la face diamétrale amont 15 du diffuseur pour former une couronne 19d enveloppant une collerette 20a d'une bague isolante amont 20, en deux parties. Cette bague est positionnée radialement par la face externe périphérique de l'extrémité du col de cygne 2.

Le porte buse 7 comporte deux portées cylindriques internes, respectivement de grand diamètre 22 et de petit diamètre 23, séparées par une face diamétrale 24. On notera que, lorsque le porte buse est monté sur la bague isolante aval 19, sa concentricité par rapport au diffuseur 3, est assurée de manière très satisfaisante grâce à la grande longueur de ses portées cylindriques 22 et 23 et à leur différence de diamètre.

Le porte buse est muni à son extrémité aval d'un filetage externe 25, de grande longueur, destiné à coopérer avec un filetage complémentaire ménagé à l'intérieur de la buse à gaz 6. Son extrémité amont est également munie d'un filetage extérieur 26 destiné à coopérer avec un filetage complémentaire ménagé dans une douille filetée 27 faisant corps avec la buse de captage 8.

Le fond de la douille est constitué par une face diamétrale 28, apte à venir directement en appui contre la collerette 20a de la bague isolante amont 20, ou, comme dans la forme d'exécution représentée, par l'intermédiaire d'un joint torique 30 en matériau élastiquement compressible.

Lorsque le montage comporte un tel joint torique 30, la liaison filetée entre le porte buse 7 et la douille 27 comporte des faces de butée limitant la compression du joint. Ces faces de butée peuvent être composées soit par la face en bout du porte buse 7 et la face diamétrale 28 de la douille filetée, soit par la face en bout 27a de la douille filetée 27 et par la face diamétrale d'un redan périphérique 33 du porte buse 7.

Il ressort de cette construction que la buse à gaz 6 et la buse de captage 8 sont liées au diffuseur 7 par l'assemblage, respectivement du porte buse 7 et de la douille filetée 27 et que la liaison en translation avec ce diffuseur est assurée par butée des épaulements aval 16 et 24 de part et d'autre du collet 19c et par l'appui de la face diamétrale 28 de la douille filetée 27 contre la face diamétrale 15 du diffuseur à travers la collerette 20a et éventuellement le joint 30.

Cette construction présente de nombreux avantages :
- par le bon positionnement du porte buse, elle permet d'obtenir une excellente concentricité entre d'une part, le diffuseur 3 et son passe fil 4 et, d'autre part, le porte buse 7 et la buse de gaz 6, en supprimant tous les risques d'amorçage entre buse et passe fil,
- elle simplifie aussi les opérations de montage et de démontage de l'ensemble de la torche, mais surtout les opérations de démontage pour remplacement des pièces d'usure, puisque, dans ce cas, le remplacement de la bague isolante aval 19 s'effectue très rapidement, en ne désolidarisant que le porte buse 7,
- ce mode d'assemblage n'exige pas de modifier les dimensions transversales de la torche qui peut ainsi conserver un encombrement favorisant le travail et ses manipulations,
- par ailleurs, le recours a un diffuseur de gaz comportant une portée centrale 14 formant une partie massive, isolée de l'extérieur, favorise la transmission des calories au col de cygne 2 et l'évacuation de ces calories par le circuit d'aspiration des fumées,
- le joint 30 monté avec un taux de compression, déterminé d'origine, élimine toute recommandation particulière pour le montage et permet, en complément de sa fonction d'étanchéité s'opposant à l'échappement du gaz inerte par la liaison filetée 13, et grâce à sa structure élastique et compressible, d'absorber les variations des dimensions longitudinales provenant, soit de la dilatation différentielle, soit des chocs,
- enfin, le montage de la buse à gaz 6 sur un porte buse 7 permet de réaliser des porte buses de longueurs différentes et, en conséquence, de réaliser des buses à gaz plus courtes et moins coûteuses. La buse à gaz étant une pièce interchangeable, cette disposition permet de réduire les frais de maintenance.

Dans la forme d'exécution qui vient d'être décrite, à l'exception des bagues aval 19 et amont 20 qui sont en matière isolante, toutes les pièces sont réalisées en métal, y compris la buse à gaz 6, mais il est évident que, dans une variante, la buse à gaz 6, seule ou avec le porte buse 7, peuvent être réalisés en matière isolante. Dans ce cas particulier, la bague isolante aval 19 enveloppant le diffuseur 3 peut être supprimée, ce qui réduit le coût de fabrication et les frais de maintenance consécutifs aux changements de cette bague isolante.

Suivant une autre caractéristique de l'invention, la buse de captage 8 est munie d'une unique ouverture 33 ménagée dans sa zone de liaison entre la douille filetée 27 et sa partie liée à la lance d'aspiration 9. La figure 2 montre que cette ouverture 33 est en forme d'arc de cercle et s'étend au moins sur la moitié de la circonférence de la buse. Cette configuration présente l'avantage de supprimer les effets de bord et la formation de courants tourbillonnaires, comme c'est le cas avec les buses comportant de multiples perforations. Il en résulte qu'à débit d'aspiration égal, les pertes de charge sont réduites et que l'aspiration des fumées est optimale.

## Revendications

1. Torche de soudage électrique sous gaz neutre et avec aspiration comportant un support tubulaire axial (2), formant col de cygne dont l'extrémité amont est disposée à l'intérieur d'une lance d'aspiration (9) et dont l'extrémité aval porte un diffuseur (3) de gaz inerte, un passe fil de contact (4), fixé dans le prolongement du diffuseur (3), une gaine guide fil (5) disposée axialement dans le col de cygne, une buse (6) de diffusion de gaz inerte entourant le passe fil (4) et alimentée par le diffuseur (3), et une buse (8) de captage des fumées raccordée à la lance d'aspiration (9), **caractérisée en ce que** la buse pour gaz (6) est solidaire d'un porte buse (7) comportant intérieurement deux portées cylindriques (22,23) de diamètres différents et dont la portée de grand diamètre à une longueur au moins égale à la valeur de son diamètre, ces deux portées (22,23) s'emmanchant sur deux portées cylindriques (14,18), étagées et externes du diffuseur (3), tandis que le calage en translation longitudinal de ce porte buse (7) est assuré, vers l'amont, par appui d'un épaulement interne (24), ménagé entre ses portées (22,23) contre l'épaulement aval (16) du diffuseur (3), et, vers l'aval, par appui contre un épaulement amont (15) du même diffuseur (3), de la face diamétrale (28), d'une douille filetée (27) vissée à l'extrémité de ce porte buse (7) et faisant corps avec la buse de captage (8).

2. Torche selon la revendication 1, **caractérisée en ce que** la buse de captage (8) comporte une unique ouverture (33) en arc de cercle, s'étendant sur une partie de sa zone de liaison entre sa partie amont, liée à la lance d'aspiration (9), et sa partie aval, vissée à l'extrémité du porte buse (7).

3. Torche selon l'une quelconque des revendications 1 et 2, **caractérisée en ce que** la buse pour gaz (6) est rapportée par vissage sur l'extrémité aval du porte buse (7).

4. Torche selon l'une quelconque des revendications 1 à 3, **caractérisée en ce que** le diffuseur (3) comporte une portée cylindrique (14) qui, centrale et épaulée à chaque extrémité, a un diamètre plus grand que ceux de ses extrémités, et est coiffée sur toute sa longueur par l'une (19a) des jupes d'une bague isolante aval (19), cette jupe (19a) se prolongeant, d'une part et vers l'aval, par un collet (19c) venant contre la face diamétrale correspondante (16) du diffuseur (3) et par une autre jupe (19b), de plus petit diamètre, coiffant la portée correspondante (18) de ce diffuseur et, d'autre part et vers l'amont, par une couronne (19d) enveloppant une collerette (20a) solidaire d'une bague isolante amont (20), en deux parties, enveloppant l'extrémité du col de cygne (2).

5. Torche selon l'une quelconque des revendications 1 à 4, **caractérisée en ce qu'**un joint d'étanchéité (30) est interposé entre la face diamétrale (28) de la douille filetée (27) et la face contre laquelle elle s'appuie, tandis que le porte buse (7) et la buse de captage (8) comportent, dans leur liaison filetée, des faces de butée limitant, au montage, la compression du joint.

6. Torche selon l'une quelconque des revendications 1 à 5, **caractérisée en ce que** la buse pour gaz est réalisée dans un matériau électriquement isolant.

## Claims

1. Inert-gas electric-arc welding torch with suction, comprising an axial tubular support (2), forming a throat whose upstream end is located inside a suction lance (9) and whose downstream end carries an inert-gas diffuser (3), a contact bushing (4), fixed in the extension of the diffuser (3), a wire guide tube (5) located axially in the throat, an inert-gas diffusing nozzle (6) surrounding the bushing (4) and supplied via the diffuser (3), and a fume capture nozzle (8) connected to the suction lance (9), **characterized in that** the gas nozzle (6) is fastened to a nozzle holder (7) which comprises, on the inside, two cylindrical bearing surfaces (22,23) of different diameters, the large-diameter bearing surface having a length at least equal to the value of its diameter, these two bearing surfaces (22,23) fitting against two external staged cylindrical bearing surfaces (14,18) of the diffuser (3), while this nozzle holder (7) is prevented from translationally moving longitudinally upstream by an internal shoulder (24), made between its bearing surfaces (22,23), pressing against the downstream shoulder (16) of the diffuser (3) and downstream by the diametral face (28) of a threaded bush (27) pressing against an upstream shoulder (15) of the same diffuser (3), the threaded bush (27) being aimed at [sic] the end of this nozzle holder (7) and forming an integral part of the capture nozzle (8).

2. Torch according to Claim 1, **characterized in that** the capture nozzle (8) comprises a single circularly arcuate opening (33) extending over part of its connection region between its upstream part connected to the suction lance (9) and its downstream part screwed onto the end of the nozzle holder (7).

3. Torch according to either of Claims 1 and 2, **characterized in that** the gas nozzle (6) is attached by screwing it onto the downstream end of the nozzle holder (7).

4. Torch according to any one of Claims 1 to 3, **characterized in that** the diffuser (3) comprises a cylindrical bearing surface (14) which, being central and shouldered at each end, has a larger diameter than those of its ends, and is covered over its entire length by one (19a) of the skirts of a downstream insulating ring (19), this skirt (19a) being extended, on the one hand, downstream by a ferrule (19c), which butts up against the corresponding diametral face (16) of the diffuser (3), and by another skirt (19b), of smaller diameter, covering the corresponding bearing surface (18) of this diffuser and, on the other hand, upstream by an annulus (19d) surrounding a flange (20a) integral with a two-part upstream insulating ring (20) surrounding the end of the throat (2).

5. Torch according to any one of Claims 1 to 4, **characterized in that** a seal (30) is interposed between the diametral face (28) of the threaded bush (27) and that face against which it bears, while the nozzle holder (7) and the capture nozzle (8) comprise, in their threaded connection, stop faces limiting, when mounted, compression of the seal.

6. Torch according to any one of Claims 1 to 5, **characterized in that** the gas nozzle is made of an electrically insulating material.

## Patentansprüche

1. Elektrischer Neutralgas-Schweißbrenner mit Absaugung, umfassend:
- einen axialen röhrenförmigen Träger (2), der einen Schwanenhals bildet, dessen hinteres Ende im Inneren eines Absaugrohrs (9) angeordnet ist und dessen vorderes Ende einen Schutzgasverteiler (3) trägt,
- eine Kontaktdrahtdurchführung (4), welche in der Verlängerung des Verteilers (3) fixiert ist,
- einen Drahtführungsmantel (5), welcher in dem Schwanenhals axial angeordnet ist,
- einen Schutzgasverteilungsstutzen (6), welcher die Drahtdurchführung (4) umgibt und von dem Verteiler (3) gespeist wird, und
- einen Raucheinfangstutzen (8), welcher an dem Absaugrohr (9) angeschlossen ist,
dadurch gekennzeichnet, daß der Gasstutzen (6) mit einem Stutzenträger (7) verbunden ist, welcher im Inneren zwei zylindrische Bereiche (22, 23) unterschiedlichen Durchmessers umfaßt, von denen der Bereich mit dem großen Durchmesser eine Länge aufweist, die wenigstens gleich dem Wert seines Durchmessers ist, wobei diese beiden Bereiche (22, 23) auf zwei abgestuften und außerhalb des Verteilers (3) vorgesehenen zylindrischen Bereichen (14, 18) sitzen, während dieser Stutzenträger (7) gegenüber Längsverschiebung festgelegt ist, und zwar nach hinten dadurch, daß sich eine Innenschulter (24), welche zwischen den Bereichen (22, 23) vorgesehen ist, an der vorderen Schulter (16) des Verteilers (3) abstützt, und nach vorne dadurch, daß sich an einer hinteren Schulter (15) desselben Verteilers (3) die in Durchmesserrichtung orientierte Fläche (28) einer Gewindehülse (27) abstützt, welche an das Ende des Stutzenträgers (7) geschraubt ist und mit dem Einfangstutzen (8) einen Körper bildet.

2. Brenner nach Anspruch 1, dadurch gekennzeichnet, daß der Einfangstutzen (8) eine einzige kreisbogenförmige Öffnung (33) umfaßt, welche sich über einen Teil seines Verbindungsbereichs zwischen seinem mit dem Absaugrohr (9) verbundenen hinteren Teil und seinem mit dem Ende des Stutzenhalters (7) verschraubten vorderen Teil erstreckt.

3. Brenner nach einem der Ansprüche 1 und 2, dadurch gekennzeichnet, daß der Gasstutzen (6) an dem vorderen Ende des Stutzenhalters (7) angeschraubt ist.

4. Brenner nach einem der Ansprüche 1 bis 3, dadurch gekennzeichnet, daß der Verteiler (3) einen zentralen und an jedem Ende mit einer Schulter versehenen zylindrischen Bereich (14) umfaßt, der einen Durchmesser aufweist, der größer ist als der seiner Enden, und der über seine gesamte Länge durch die eine (19a) der Mantelflächen eines vorderen Isolierrings (19) bedeckt ist, wobei diese Mantelfläche (19a) sich einerseits nach vorne in einen an der entsprechenden in Durchmesserrichtung orientierten Fläche (16) des Verteilers (3) anliegenden Kragen (19c) sowie in eine weitere den entsprechenden Bereich (18) dieses Verteilers bedeckende Mantelfläche (19b) kleineren Durchmessers fortsetzt und sich andererseits nach hinten in einen Kranz (19d) fortsetzt, welcher einen Kragen (20a) umgibt, der mit einem zweiteiligen hinteren Isolierring (20) verbunden ist, der das Ende des Schwanenhalses (2) umgibt.

5. Brenner nach einem der Ansprüche 1 bis 4, dadurch gekennzeichnet, daß zwischen der in Durchmesserrichtung orientierten Fläche (28) der Gewindehülse (27) und der Fläche, an der sie sich abstützt, eine Dichtung (30) angeordnet ist, während der Stutzenträger (7) und der Einfangstutzen (8) in ihrer Gewindeverbindung Anschlagflächen umfassen, welche bei der Montage die Kompression der Dichtung begrenzen.

6. Brenner nach einem der Ansprüche 1 bis 5, dadurch gekennzeichnet, daß der Gasstutzen aus einem elektrisch isolierenden Material gefertigt ist.
